# EUROPEAN PATENT SPECIFICATION

(11) **EP 0 746 868 B1**
(45) Date of publication and mention of the grant of the patent: **01.12.1999**
(21) Application number: 94907103.9
(22) Date of filing: 22.12.1993
(51) Int. Cl.: H01J 29/56, H04N 9/28, H01J 29/70

(54) **CORRECTION OF LINEARITY ERRORS**
KORREKTUR VON LINEARITÄTSFEHLERN
CORRECTION D'ERREURS DE LINEARITE

(43) Date of publication of application: 11.12.1996
(73) Proprietor: THOMSON CONSUMER ELECTRONICS, INC., Indianapolis, IN 46290-1024 (US)
(72) Inventor: TRUSKALO, Walter, Indianapolis, IN 46226 (US)
(74) Representative: Brykman, Georges
(86) International application number: US9312544
(87) International publication number: WO9517763

(56) References cited:
- EP-A- 0 050 692
- DE-A- 1 462 913
- GB-A- 2 213 635
- US-A- 4 547 707
- US-A- 4 814 671
- US-A- 4 833 370
- US-A- 5 223 769
- PATENT ABSTRACTS OF JAPAN vol. 016, no. 271 (E-1218) 18 June 1992 & JP-A-04 063 066 (SONY CORP) 28 February 1992

## Description

### Background of the Invention

The present invention relates to a cathode ray tube system which uses an auxiliary deflection winding for convergence correction. Such an auxiliary convergence correction winding or yoke is commonly used in projection television systems where each one of multiple cathode ray tubes generates a unique color image. When the color images are optically combined, slight correction is necessary in order that the multiple images exactly match.

In some systems, a convergence yoke is positioned close enough to the deflection yoke so that deflection currents are induced in the convergence yoke. Such induced currents in the convergence yoke may cause undesirable deflection of the electron beam. European patent application N° EP 0 050 692 (IBM) describes such a system in which a deflection yoke is used to cause the electron beams to raster scan across the screen and in which a convergence assembly on the neck of the tube adjusts the convergence of the beam. It has been discovered by the applicant of this patent that a large green fringe can become apparent on vertical lines on the extreme left-hand edge of the screen, and that this green fringe is caused by interaction of magnetic fields from the deflection yoke with coils of the convergence assembly. To compensate for this interaction a compensation coil 11 is located adjacent the convergence assembly to pick up the same interfering magnetic field as the assembly itself. Sensing coil 11 is positioned within the stray field which is produced by the deflection yoke. Since this is the same field to which the convergence yoke is exposed. the output from this sensing coil is used to nullify the currents in the convergence yoke which are induced by the stray fields of the deflection yoke. To do so, the current induced in this coil is fed back to the appropriate convergence coil in order to cancel the pulse induced by the deflection yoke in the convergence assembly Unfortunately, this arrangement does not completely solve the problem because the sensing coil 11 will tend to also pick up the fields produced by the convergence yoke. Therefore the device shown by the reference will also reduce the field produced by the convergence yoke.

The problem solved by the Applicant is also related to current induced in the convergence yoke by the deflection current circulating in the deflection yoke. The Applicant has found that such induced currents cause an apparent stretch of the image near the beginning of horizontal scan.

### Summary of the Invention

It is an object of the present invention to provide a cathode ray tube display system in which such an image distortion, due to currents induced in a convergence correction yoke by the deflection yoke, is corrected.

More specifically, the invention provides a cathode ray tube system which includes a kinescope a deflection yoke and a correction yoke mounted thereon. The deflection yoke is energized by sawtooth wave currents to generate magnetic fields for scanning an electron beam across the face of the kinescope. The correction yoke, when energized, generates magnetic fields which correct for beam landing errors in the kinescope. Since the correction yoke is affected by stray fields from the deflection yoke, in order to compensate for the effect of the stray fields on the correction yoke, a source of compensation current pulse is fed to the correction yoke near the beginning of a deflection sawtooth wave. The current pulse is generated in response to a deflection retrace pulse and delayed by a delay means to occur near the beginning of a deflection sawtooth wave.

### Brief Description of the Drawing

FIGURE 1 is a schematic drawing of a cathode ray tube having a deflection yoke and a convergence correction yoke.

FIGURE 2 shows waveform diagrams of the current that is induced in the convergence correction yoke by the horizontal deflection winding for different values of correction yoke winding circuit impedances.

FIGURE 3 is a schematic circuit diagram, in block form, of a cathode ray tube display system, according to the invention, which compensates for the currents in the correction yoke which are induced by the deflection yoke.

FIGURE 4 is a detailed circuit diagram of a correction arrangement for three cathode ray tubes.

### Detailed Description of the Preferred Embodiment

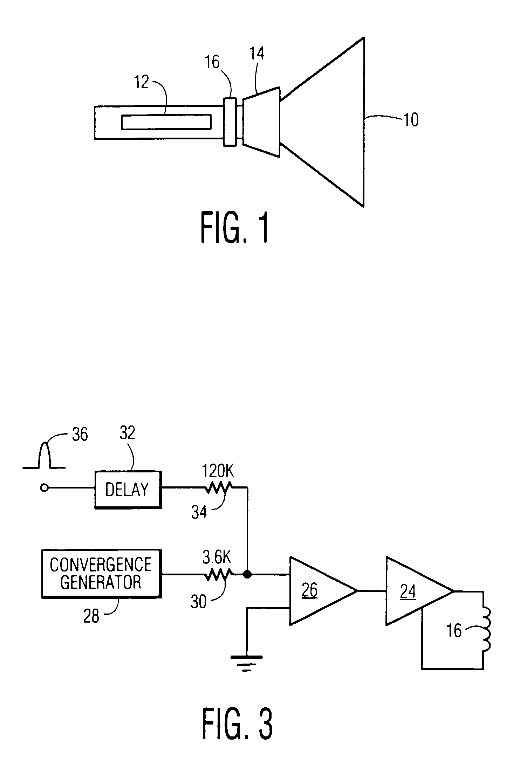

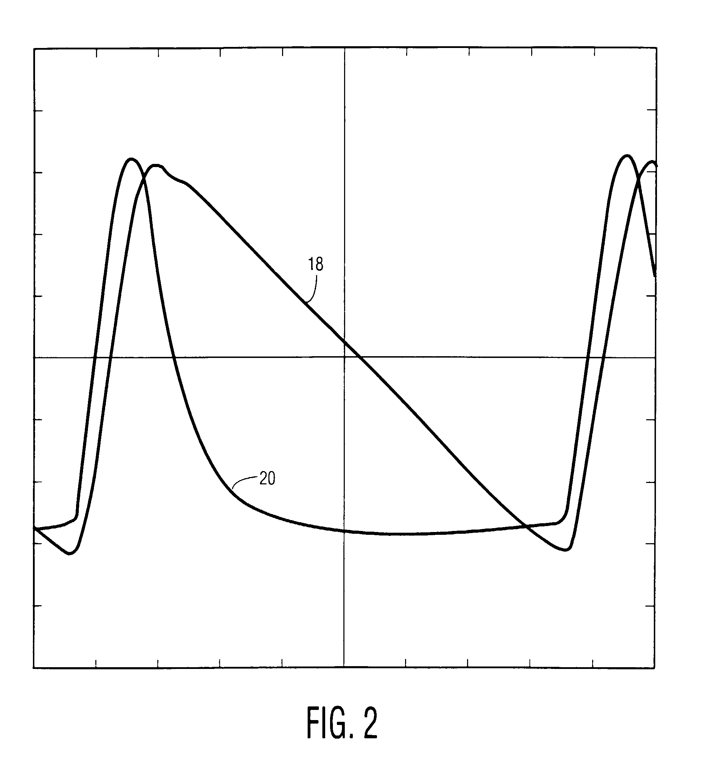

FIGURE 1 shows a cathode ray tube 10 having an electron gun 12 which generates an electron beam and directs it toward the face of the cathode ray tube. Deflection yoke 14 magnetically scans the beam across the face of the tube while convergence correction yoke 16 corrects for beam landing errors. It is to be noted that convergence correction yoke 16 and deflection yoke 14 are in close proximity, so that stray fields which are generated by deflection yoke 14 tend to induce currents in correction yoke 16.

FIGURE 2 shows waveforms of the current which is induced in convergence correction yoke 16 by the horizontal deflection field from deflection yoke 14. Curve 18 shows the current which is induced in correction yoke 16 when yoke 16 is terminated by zero impedance (a short circuit). This waveform closely approximates the waveform of the horizontal deflection current. However, when convergence correction yoke 16 is terminated by a 40 ohm impedance, which is the approximate value of the output impedance of the amplifier which drives the convergence correction yoke, the shape of the induced current changes to the shape shown by curve 20. Curve 20 is a pulse occurring at the beginning of horizontal trace and having a duration of about 15% of the horizontal trace interval. The induced current reaches its baseline about 4 microseconds (µS) after the start of video.

FIGURE 3 shows a schematic diagram, in block form, of a circuit for correcting for the current which is induced in the convergence yoke by the horizontal deflection winding of the deflection yoke. Convergence yoke 16 is driven by power amplifier 24 which is, in turn, driven by signal amplifier 26. Signal amplifier 26 receives a convergence correction waveform from convergence generator 28 through resistor 30. Also fed to the input of the signal amplifier 26 is a pulse signal fed through resistor 34. The input to signal amplifier 26 is therefore the sum of the waveform generated by convergence generator 28 and the pulse waveform which is fed through resistor 34. The pulse waveform which is fed through resistor 34 may be generated by suitably delaying a retrace pulse 36 in delay 32, so that the pulse waveform input to amplifier 26 occurs during the first 4µS after the start of video in the horizontal trace interval.

In this way, the undesired current which is induced in the convergence correction yoke 16 by the horizontal deflection winding is compensated or counteracted by the pulse which is fed through resistor 34 to the input of signal amplifier 26.

In order for pulse 36 to counteract or compensate for the current which is induced in convergence yoke 22 by the horizontal deflection winding, the pulse must occur at the beginning of the trace interval. One way of producing a pulse at this time is to feed a retrace pulse 36 through a delay circuit 32 so that the retrace pulse is fed through resistor 34 to the input of amplifier 26 at the beginning of the deflection trace interval. However, it is apparent that other pulse sources may be used.

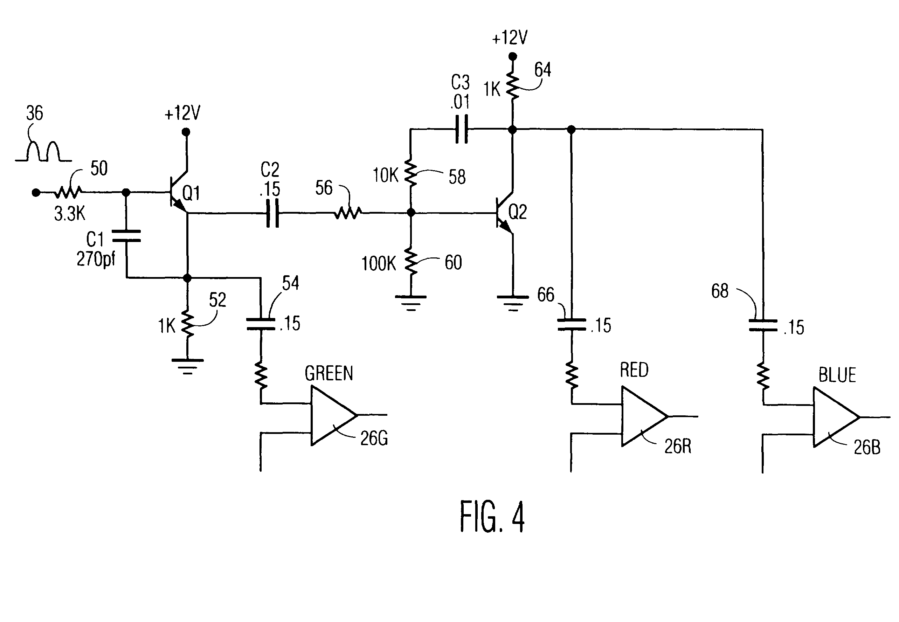

Figure 4 is a circuit diagram of an arrangement for supplying correction current to each of green, red and blue display tubes of a multicolored display system. Flyback pulses 36 are fed through resistor 50 to the base of transistor 70. Capacitor C1 delays the application of pulses 36 to the base of transistor 70.

Transistor 70 acts as an emitter-follower and generates pulses at its emitter which are passed through capacitor C2 and resistor 56 to the base of transistor 72. Capacitor C2 may be used to control the pulse width. For example, a value of 15 pf will produce a narrow pulse.

Capacitor C3 acts as a feedback path from collector-to-base of transistor Q2, in order to improve the trailing edge timing stability.

The output pulse for the red and blue kinescopes is taken from the collector of transistor Q2 to signal amplifiers 26R and 26B. Pulses for the green kinescope are of the opposite polarity, and are therefore taken from the emitter of transistor Q1 to signal amplifier 26G.

## Claims

1. A cathode ray tube display system including a kinescope (10), a deflection yoke (14) and a correction yoke (16) mounted thereon, said deflection yoke (14) being energized by horizontal and vertical sawtooth wave currents to generate magnetic fields for scanning an electron beam across a face of said kinescope (10), said correction yoke (16), when energized, generating magnetic fields which correct for beam landing errors in said kinescope (10), said correction yoke (16) being affected by stray fields from said deflection yoke (14); wherein, in order to compensate for the effect of said stray fields on said correction yoke (16), circuit means (24, 26, 28, 30, 32, 34) are provided for feeding a compensation current pulse to said correction yoke (16), said current pulse being generated in response to a deflection retrace pulse (36), and delayed by a delay means (32) to occur near the beginning of a deflection sawtooth wave.

2. A display system as defined by Claim 1, in which said delay means (32) comprises a transistor (Q1) and a capacitor (C1), said capacitor coupled from base to emitter of said transistor.

3. A display system as defined by Claim 2, in which said transistor (Q1) is connected as an emitter follower, the emitter of said transistor being coupled to said correction yoke (16).

4. A display system as defined by Claim 2, in which the emitter of said transistor (Q1) is coupled to the base of a second transistor (Q2), the collector of said second transistor being coupled to a second correction yoke.

## Patentansprüche

1. Wiedergabesystem mit einer Katodenstrahlröhre mit einer Bildröhre (10), einem Ablenkjoch (14) und einem darauf angeordneten Korrekturjoch (16), wobei das Ablenkjoch (14) zum Erzeugen von Magnetfeldern für die Ablenkung eines Elektronenstrahls über einen Schirmträger der Bildröhre (10) durch horizontale und vertikale sägezahnförmige Ablenkströme gespeist wird und das Korrekturjoch (16) bei seiner Speisung Magneffelder erzeugt, die Landungsfehler des Strahls in der Bildröhre (10) korrigieren und wobei das Korrekturjoch (16) durch Streufelder von dem Ablenkjoch (14) beeinflußt wird und zur Kompensation der Wirkung der Streufelder auf das Korrekturjoch (16) Schaltungsmittel (24, 26, 28, 30, 32, 34) zum Zuführen eines Kompensations-Stromimpulses zu dem Korrekturjoch (16) vorgesehen sind und der Stromimpuls aus einem Rücklaufimpuls (36) der Ablenkung erzeugt und durch ein Verzögerungsmittel (32) verzögert wird und in der Nähe des Beginns einer Ablenk-Sägezahnschwingung auftritt.

2. Wiedergabesystem nach Anspruch 1, wobei das Verzögerungsmittel (32) einen Transistor (Q1) und einen Kondensator (C1) enthält und der Kondensator zwischen der Basis und dem Emitter des Transistors liegt.

3. Wiedergabesystem nach Anspruch 2, wobei der Transistor (Q1) als Emitterfolger geschaltet und der Emitter des Transistors mit dem Korrekturjoch (16) verbunden ist.

4. Wiedergabesystem nach Anspruch 2, wobei der Emitter des Transistors (Q1) mit der Basis eines zweiten Transistors (Q2) und der Kollektor des zweiten Transistors mit einem zweiten Korrekturjoch verbunden ist.

## Revendications

1. Système d'affichage à tube à rayons cathodiques comportant un tube-image (10), un bloc de déviation (14) et un bloc de correction (16) montés sur celui-ci, ledit bloc de déviation (14) étant excité par des courants en dents de scie horizontal et vertical pour générer des champs magnétiques en vue de balayer un faisceau d'électrons en travers de la dalle dudit tube-image (10), ledit bloc de correction (16), lorsqu'il est excité, générant des champs magnétiques qui corrigent les erreurs d'atterrissage du faisceau dans ledit tube-image (10), ledit bloc de correction (16) étant affecté par des champs parasites issus dudit bloc de déviation (14); dans lequel, dans le but de compenser l'effet desdits champs parasites sur ledit bloc de correction (16), des moyens de circuit (24, 26, 28, 30, 32, 34) sont prévus pour appliquer une impulsion de courant de compensation audit bloc de correction (16), ladite impulsion de courant étant générée en réponse à une impulsion de retour de balayage de déviation (36) et retardée par un moyen à retard (32) de façon à se produire près du début d'un signal en dents de scie de déviation.

2. Système d'affichage selon la revendication 1, dans lequel ledit moyen à retard (32) comprend un transistor (Q1) et un condensateur (C1), ledit condensateur étant couplé de la base à l'émetteur dudit transistor.

3. Système d'affichage selon la revendication 2, dans lequel ledit transistor (Q1) est connecté comme un montage émetteur-suiveur, l'émetteur dudit transistor étant couplé audit bloc de correction (16).

4. Système d'affichage selon la revendication 2, dans lequel l'émetteur dudit transistor (Q1) est couplé à la base d'un deuxième transistor (Q2), le collecteur dudit deuxième transistor étant couplé à un deuxième bloc de correction.
